# EUROPEAN PATENT APPLICATION

(11) **EP 1 911 944 A2**
(43) Date of publication of application: **16.04.2008**
(21) Application number: 07019897.3
(22) Date of filing: 11.10.2007
(51) Int. Cl.: F01N 7/08, F01N 3/035, F01N 11/00, F01N 3/023

(54) **Tailpipe exhaust gas mixer and method**

(30) Priority: 11.10.2006 US 548446
(71) Applicant: International Engine Intellectual Property Company, LLC., Warrenville, IL 60555 (US)
(72) Inventor: Wu, Shouhao, Roselle IL 60172 (US); Lin, Jason C., Naperville IL 60565 (US)
(74) Representative: Kuhnen & Wacker

(57) **Abstract**

An engine system (100) includes an internal combustion engine (101) connected to an exhaust system (102). A portion (103) of the exhaust system (102) is connected to the internal combustion engine (101), and an additional portion (111) of the exhaust system (102) is connected to a vehicle and includes a tailpipe (123). An after-treatment system (105, 109) is connected to the engine (100) located between the internal combustion engine (101) and the tailpipe (111). A mixer (200) is located between a first segment of the tailpipe (202) and a second segment of the tailpipe (204). The mixer (200) is arranged to mix a flow of exhaust gas (214) from the first segment of the tailpipe (202) with a flow or air (218) to yield a mixture, and to route the mixture into the second segment of the tailpipe (204).

## Description

### Field of the Invention

This invention relates to internal combustion engines, including but not limited to exhaust passages containing after-treatment devices for the internal combustion engine.

### Background of the Invention

Internal combustion engines generate exhaust gas during operation that contains various chemical compounds. Many modern engines include after-treatment devices associated therewith for treating some of these chemical compounds in the exhaust gas. Typical after-treatment components may include Oxidation Catalysts (OC) and particulate filters (PF). Compression ignition engines in particular, may use such devices for treating their exhaust gas.

Treatment, or after-treatment as it is commonly known, is a process of treating exhaust gas that is generated during the operation of an engine and before it is released to the environment. In a typical vehicle, for example, an engine might be connected to an exhaust pipe, or tail pipe, that may carry exhaust gases away from the engine. The vehicle tail pipe may include various after-treatment components, along with other components, for example, mufflers, valves, and so forth.

During operation of an engine, a temperature of the exhaust gases that are generated depends on various factors. During normal engine operation, the temperature of exhaust gas may depend primarily on the speed and load of the engine, and also on other factors, such as barometric pressure, ambient temperature, and so forth. During an idle condition, the temperature of exhaust gas in the tail pipe is expected to be relatively low, for example on some engines about 400 deg. F (200 deg. C). During conditions of high loading, for example when the vehicle is traveling at a higher rate of speed under a high load, the temperature of exhaust gas might reach temperatures of 1,500 deg. F (815 deg. C).

PF regeneration, as is known, is a periodic process by which trapped matter in the PF burns off to clean the PF. The addition of after-treatment devices, such as a PF, might increase the temperature of exhaust gas at times when such temperature would otherwise be low. This increase in temperature may be due to a regeneration event of the PF that might be taking place, for example, while the engine is idling.

Accordingly, there is a need for avoiding exhaust temperature increases in vehicle tailpipes during times when such temperatures are expected to be low.

### Summary of the Invention

Exhaust temperature increases in vehicle tailpipes during times when such temperatures are expected to be low may advantageously be avoided as described herein. An engine system includes an internal combustion engine connected to an exhaust system. A portion of the exhaust system is connected to the internal combustion engine, and an additional portion of the exhaust system is connected to a vehicle and includes a tailpipe. An after-treatment system is connected to the engine located between the internal combustion engine and the tailpipe. A mixer is located between a first segment of the tailpipe and a second segment of the tailpipe. The mixer is arranged to mix a flow of exhaust gas from the first segment of the tailpipe with a flow or air to yield a mixture, and to route the mixture into the second segment of the tailpipe.

A method of reducing a temperature of an exhaust gas stream in a tailpipe of a vehicle includes the step of generating a flow of exhaust gas during operation of an engine. The flow of exhaust gas may be treated with at least one after-treatment component, and routed to a tailpipe that includes a mixer. The flow of exhaust gas may be admitted into the mixer where it may be mixed with a flow of air in the mixer to yield a mixture. The mixture, being advantageously at a lower temperature than the flow of exhaust gas may be expelled from the mixer.

A method of diluting exhaust gas that is generated by an internal combustion engine installed in a vehicle, includes the steps of admitting the flow of exhaust gas into a particulate filter, and increasing a temperature of the flow of exhaust gas passing through the particulate filter at times when the particulate filter is regenerating. The flow of exhaust gas at an elevated temperature is admitted into a mixer, along with a flow of air that is also admitted into the mixer. The flow of exhaust gas at the elevated temperature may be mixed with the flow of air to yield a mixture at a lower temperature, which may be expelled from the mixer into the environment.

### Brief Description of the Drawings

FIG. 1 is a block diagram of an engine system having a mixer in a tailpipe in accordance with the invention.

FIG. 2 and FIG. 3 are cross sections of an exhaust gas mixer in accordance with the invention.

FIG. 4 and FIG. 5 are cross sections of another embodiment of an exhaust gas mixer in accordance with the invention.

FIG. 6 is a flowchart for a method of reducing a temperature of an exhaust gas stream in a tailpipe of a vehicle in accordance with the invention.

FIG. 7 is a flowchart for a method of diluting exhaust gas that is generated by an internal combustion engine installed in a vehicle in accordance with the invention.

### Description of a Preferred Embodiment

The following describes an apparatus for and method of diluting an exhaust gas stream in a vehicle tail pipe with ambient air, in order to reduce a temperature of the exhaust stream before releasing it to the environment.

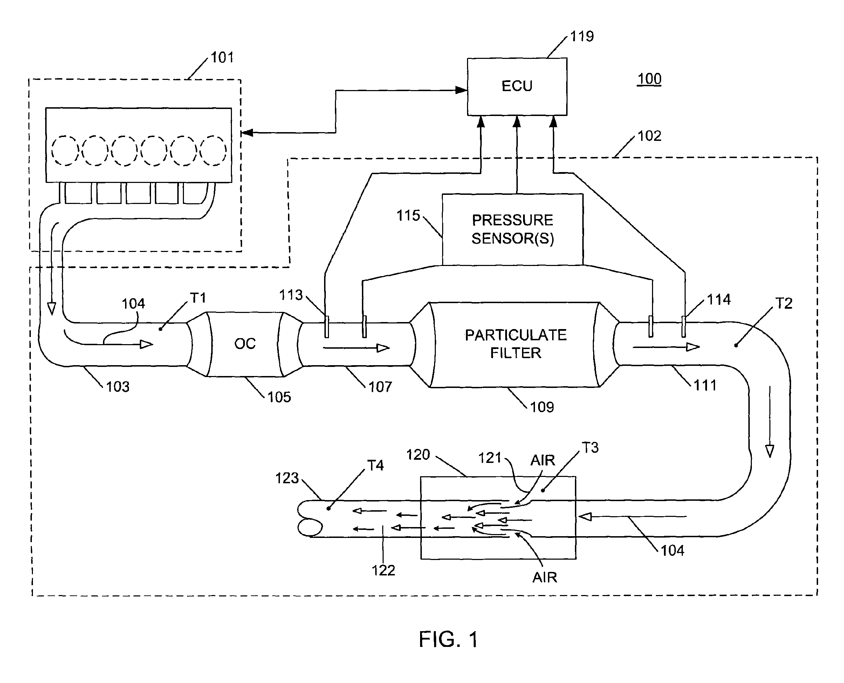

A block diagram of an engine system 100 having an after-treatment system 102 is shown in FIG. 1. The engine system 100 includes a base engine 101 that is connected to an exhaust pipe 103. During operation of the base engine 101 in a vehicle (not shown), an exhaust gas stream 104 that is generated may be carried away from the base engine 101 and to the after-treatment system 102 through the exhaust pipe 103. The exhaust gas stream 104 is denoted by hollowed-head arrows.

The exhaust pipe 103 is connected to an oxidation catalyst (OC) 105, which in turn is connected to a pipe segment 107 leading to a particulate filter (PF) 109. The PF 109 is connected to a tailpipe 111 which may also include a muffler (not shown) or other components. The after-treatment system 102 may also include a variety of sensors to monitor its operation. For example, a first temperature sensor 113 may be disposed in the pipe segment 107 upstream of the PF 109, and a second temperature sensor 114 may be disposed in the tailpipe 111 downstream of the PF 109. The after-treatment system 102 may also include one or more pressure sensor(s) 115 connected upstream and/or downstream of the PF 109 to monitor it's operation and extent of loading with particulate matter. Information from the sensors 113, 114, and 115 may be relayed to an electronic control unit (ECU) 119. The after-treatment system 102 may include additional components than the ones described herein for illustration, for example, the system 102 may include a lean NOx trap (LNT), a urea-based selective catalytic reduction (SCR) system, or a diesel fuel reformer system (DFRS), and so forth.

At times when a regeneration of the PF 109 is initiated, a temperature T1 of the exhaust gas stream 104 before the PF 109 may substantially increase to a temperature T2 after the PF 109. On a typical engine, the exhaust gas stream 104 would exit the tailpipe 111 at the temperature T2.

It is advantageous to the sociability of the vehicle to avoid higher temperature exhaust gas emissions from the tailpipe 111. For this reason, a mixer device 120 may be connected in-line with the tailpipe 111. The mixer 120 may advantageously be a venturi mixer that mixes a flow of fresh air 121, denoted by the solid headed arrows, that is pulled in from outside the tailpipe 111, with the exhaust gas stream 104, to yield a mixture 122 that may pass through a downstream portion 123 of the tailpipe 111. One portion of the mixture 122 is exhaust gas at the temperature T2, and a remaining portion of the mixture 122 is fresh air at an ambient temperature T3. A resultant temperature T4 of the mixture 122 may advantageously be lower than the temperature T2 of the exhaust gas stream 104, which is advantageous to the sociability of the vehicle.

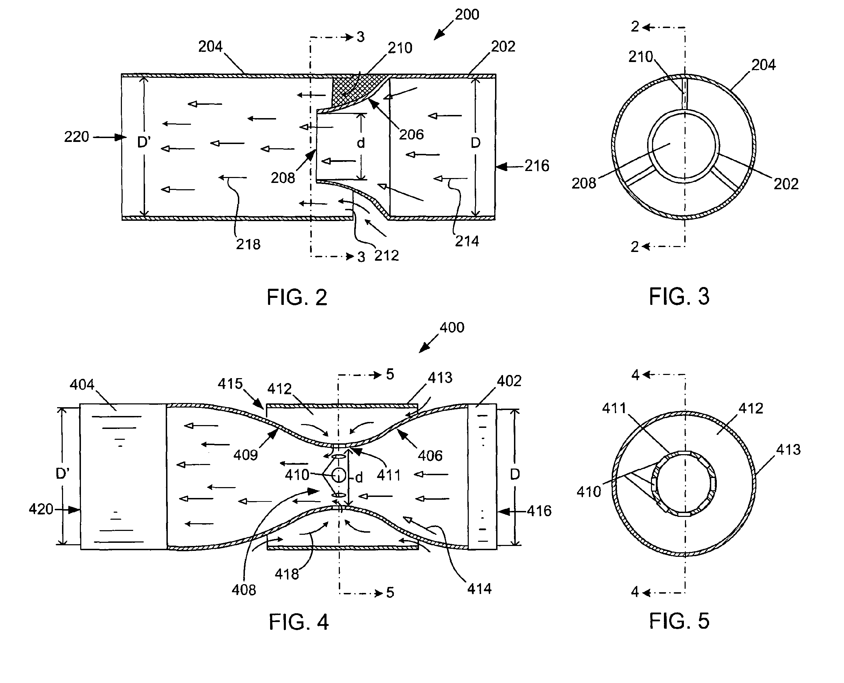

One embodiment of an exhaust gas dilution mixer 200 is shown in FIG. 2 and FIG. 3 in different cross section views. The mixer 200 may be connected in-line with a first tailpipe segment 202 and a second tailpipe segment 204. The first tailpipe segment 202 may have a first inner diameter "D" extending up to a neck-down portion 206. The neck-down portion 206 of the segment 202 may reduce the diameter D to an inner diameter "d" at a nozzle opening 208. The segment 204 may lie past the opening 208 and have the same inner diameter D as the segment 202, or may alternatively have a larger inner diameter "D"'. A plurality of connector tabs 210 may connect the first segment 202 with the second segment 204. A gap or opening 212 may be defined between the segments 202 and 204, and between the tabs 210.

At times when a flow of exhaust gas 214, denoted by hollow-head arrows, enters the mixer 200 through an upstream portion 216 thereof, the exhaust gas flow 214 flows through the segment 202 under a pressure and velocity that depends on the diameter D. When the flow of exhaust gas 214 reaches the neck-down portion 206, it is gradually accelerated to pass through the opening 208. The higher velocity, and thus lower static pressure, of the flow of exhaust gas 214 passing through the opening 208 depends on the smaller inner diameter d. A low static pressure and high flow momentum of the accelerated flow of exhaust gas 214 exiting the opening 208 advantageously draws in a flow of ambient air 218, denoted by solid-head arrows, through the opening 212. The flow of exhaust gas 214 may mix and be diluted by the flow of ambient air 218 to yield a mixture. The mixture of flows 214 and 218 may flow out of the mixer from a downstream portion 220 thereof, at a velocity and pressure that depends on the inner diameter D'. The mixture in the downstream portion 220 is advantageously at a lower temperature than the flow in the upstream portion 216.

Another embodiment of an exhaust gas dilution mixer 400 is shown in FIG. 4 and FIG. 5 in different cross section views. The mixer 400 may be connected in-line with a first tailpipe segment 402 and a second tailpipe segment 404. The first tailpipe segment 402 may have a first inner diameter "D" extending up to a neck-down portion 406. The neck-down portion 406 of the segment 402 may reduce the diameter D to an inner diameter "d" at a nozzle opening 408. The segment 404 may lie past the opening 408 and have the same inner diameter D as the segment 402, or may alternatively have a larger inner diameter "D"'. A neck-up portion 409 may smoothly transition between the diameter d of the opening 408 to the diameter D' of the segment 404. A plurality of openings 410 may fluidly connect a region 411 that is adjacent to the opening 408 with the environment. Advantageously, the region 411 is connected to the environment through a cavity 412 that is partially defined between an outer surface of the region 411 and a shield 413. The cavity 412 is in fluid communication with the region 411 through the plurality of openings 410, and with the environment through a gap 415 between the shield 413 and either one or both of the tube segment(s) 402 and 404.

At times when a flow of exhaust gas 414, denoted by hollow-head arrows, enters the mixer 400 through an upstream portion 416 thereof, the exhaust gas flow 414 flows through the segment 402 under a pressure and velocity that depends on the diameter D. When the flow of exhaust gas 414 reaches the neck-down portion 406, it is gradually accelerated to pass through the opening 408. The higher velocity, and thus lower static pressure, of the flow of exhaust gas 414 passing through the opening 408 at the region 411 depends on the smaller inner diameter d. A low static pressure and high flow momentum of the accelerated flow of exhaust gas 414 passing through the region 411 advantageously draws in a flow of ambient air 418, denoted by solid-head arrows, through the plurality of openings 410. The flow of exhaust gas 414 may mix and be diluted by the flow of ambient air 418 to yield a mixture. The mixture of flows 414 and 418 may pass through the opening 408, through the neck-up portion 409, and flow out of the mixer 400 from a downstream portion 420 thereof, at a velocity and pressure that depends on the inner diameter D'. The mixture in the downstream portion 420 is advantageously at a lower temperature than the flow in the upstream portion 416.

The openings 410 may advantageously be arranged symmetrically around the region 411. The shield 413 is optional and may be used to avoid intrusion of debris, and especially water, into the mixer 400 through the openings 410. The shield 413 may be connected to one or both of the segment(s) 402 and 404 of the tailpipe with tabs (not shown) or any other suitable connection arrangement. Embodiments other than the ones shown that use a venturi effect for mixing an exhaust flow in a tailpipe with ambient air may advantageously be used to dilute the flow of exhaust gas and lower it's temperature in the tailpipe.

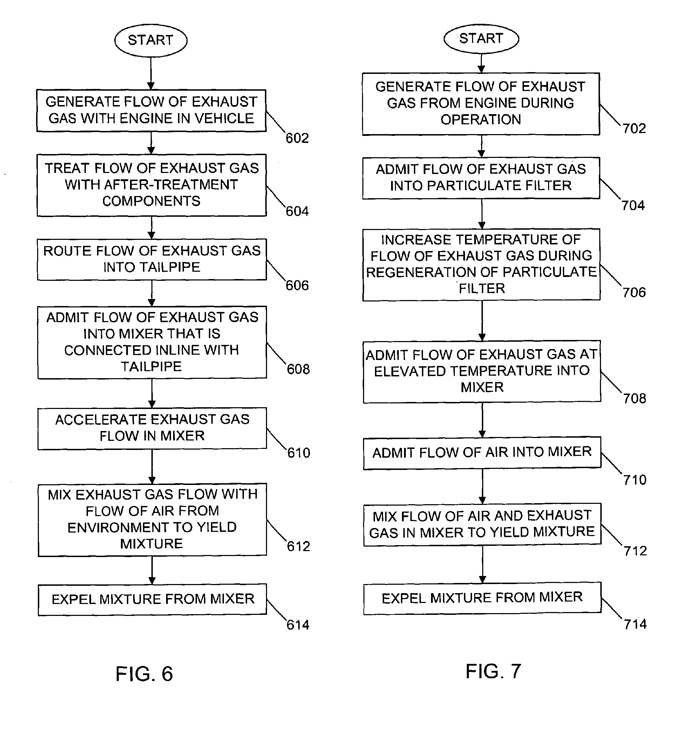

A flow chart for a method of reducing a temperature of an exhaust gas stream in a tailpipe of a vehicle is shown in FIG. 6. An engine associated with a vehicle may be connected to an exhaust system, and may generate a flow of exhaust gas during operation at step 602. The exhaust system may include various exhaust gas treatment components, or after-treatment components, that are arranged to treat a flow of exhaust gas passing therethrough at step 604. The flow of exhaust gas, having passed through the after-treatment components, may be routed into the tailpipe step 606. The tailpipe may be a part of the exhaust system of the vehicle that releases exhaust gas to the environment.

The tailpipe may include an inline mixer device. The flow of exhaust gas in the tailpipe may enter the mixer at step 608, be accelerated at step 610, be mixed with a flow of air from the environment to yield a mixture at step 612, and exit the mixer at step 614. The mixture may advantageously be at a lower temperature than the flow of exhaust gas. The flow of air from the environment may pass through a gap between two adjacent segments of the tailpipe, or may enter a region thereof through a plurality of openings. The mixer may advantageously use a "venturi" effect to augment mixing between the flow of exhaust gas and the flow of air.

A flow chart for a method of diluting exhaust gas generated by an internal combustion engine installed in a vehicle is shown in FIG. 7. The internal combustion engine may generate a flow of exhaust gas during operation at step 702. The flow of exhaust gas may enter a particulate filter at step 704. At times when the particulate filter is regenerating, a temperature of the flow of exhaust gas may increase at step 706. The flow of exhaust gas, at the elevated temperature, may enter a mixer at step 708. A flow of air may also enter the mixer at step 710, where it may be mixed with the flow of exhaust gas at step 712 to yield a mixture. The mixture may exit the mixer at step 714.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. An engine system, comprising:
an internal combustion engine connected to an exhaust system, wherein a portion of the exhaust system is connected to the internal combustion engine, and an additional portion of the exhaust system is connected to a vehicle and includes a tailpipe;
an after-treatment system connected to the vehicle, wherein the after-treatment system is connected to the exhaust system and disposed between the internal combustion engine and the tailpipe;
a mixer that is disposed between a first segment of the tailpipe and a second segment of the tailpipe, wherein the mixer is arranged to mix a flow of exhaust gas from the first segment of the tailpipe with a flow or air to yield a mixture, and wherein the mixer is arranged to route the mixture into the second segment of the tailpipe.

2. The engine system of claim 1, wherein the mixer is disposed inline with the first segment and the second segment.

3. The engine system of claim 1, wherein the mixer comprises:
an upstream portion connected to the first segment;
a downstream portion connected to the second segment;
a neck-down portion that forms a nozzle opening, the neck-down portion disposed between the first segment and the second segment;
a plurality of tabs disposed around the neck-down portion and arranged to connect the first segment and the second segment;
wherein a gap is defined between the first segment, the second segment, and the plurality of tabs, and wherein the gap is arranged and constructed to pass the flow of air therethrough.

4. The engine system of claim 3, wherein the first segment has a first inner diameter, wherein the nozzle opening has a second inner diameter, and wherein the second inner diameter is smaller than the first inner diameter.

5. The engine system of claim 3, wherein the plurality of tabs is three tabs, and
wherein the three tabs are arranged symmetrically around the nozzle opening.

6. The engine system of claim 3, wherein a low pressure region is created on the downstream portion side of the nozzle opening during operation.

7. The engine system of claim 1, wherein the mixer comprises:
an upstream portion connected to the first segment;
a downstream portion connected to the second segment;
a neck-down portion connected to the upstream portion;
a neck-up portion connected to the downstream portion;
a mixing region disposed between the neck-down portion and the neck-up portion;
wherein the mixing region defines a nozzle opening, and wherein a plurality of openings fluidly connects the mixing region with an ambient supply of air.

8. The engine system of claim 7, further comprising a shield disposed around the mixing region, wherein a cavity is defined between the mixing region and the shield, and wherein an air path is defined for the flow of air from the ambient supply of air, through a gap disposed between the shield and at least one of the first segment and the second segment, through the cavity, and through the plurality of openings.

9. A method of reducing a temperature of an exhaust gas stream in a tailpipe of a vehicle, comprising the steps of:
generating a flow of exhaust gas during operation of an engine;
treating the flow of exhaust gas with at least one after-treatment component;
routing the flow of exhaust gas to a tailpipe that includes a mixer;
admitting the flow of exhaust gas into the mixer;
mixing the flow of exhaust gas with a flow of air in the mixer to yield a mixture; and
expelling the mixture from the mixer.

10. The method of claim 9, further comprising the step of filtering a particulate matter from the flow of exhaust gas in a particulate filter.

11. The method of claim 10, further comprising the step of increasing a temperature of the flow of exhaust gas when the particulate filter is in a regeneration stage of operation.

12. The method of claim 11, further comprising the step of cooling the flow of exhaust gas that is accomplished by the step of mixing the flow of exhaust gas with the flow of air.

13. The method of claim 9, further comprising the step of passing the flow of air through a gap defined between a first segment of the tailpipe and a second segment of the tailpipe.

14. The method of claim 9, wherein the mixer is a venturi mixer, and wherein the step of mixing further includes the steps of:
accelerating the flow of exhaust gas;
creating a low pressure region adjacent to a nozzle opening; and
supplying the flow of air into the low pressure region.

15. The method of claim 9, further comprising the step of admitting the flow of air through a plurality of openings.

16. A method of diluting exhaust gas generated by an internal combustion engine installed in a vehicle, comprising the steps of:
generating a flow of exhaust gas from the internal combustion engine;
admitting the flow of exhaust gas into a particulate filter;
increasing a temperature of the flow of exhaust gas passing through the particulate filter at times when the particulate filter is regenerating;
admitting the flow of exhaust gas at an elevated temperature into a mixer;
admitting a flow of air into the mixer;
mixing the flow of exhaust gas at the elevated temperature with the flow of air to yield a mixture;
expelling the mixture from the mixer.

17. The method of claim 16, further comprising the step of passing the flow of air through a gap.

18. The method of claim 16, wherein the mixer is a venturi mixer, and wherein the step of mixing further includes the steps of:
accelerating the flow of exhaust gas;
creating a low pressure region adjacent to a nozzle opening; and
supplying the flow of air into the low pressure region.

19. The method of claim 16, further comprising the step of admitting the flow of air into the mixer through a plurality of openings.
